# EUROPEAN PATENT APPLICATION

(11) **EP 4 741 125 A1**
(43) Date of publication of application: **13.05.2026**
(21) Application number: 25187251.1
(22) Date of filing: 03.07.2025
(51) Int. Cl.: B26D 7/01, B21D 28/02, B26D 1/00, B26D 1/01, B26D 1/04, B21D 1/00

(54) **APPARATUS FOR MANUFACTURING SECONDARY BATTERY AND ELECTRODE PLATE CUTTING UNIT FOR MANUFACTURING SECONDARY BATTERY**

(30) Priority: 06.11.2024 KR 20240156598
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si (KR)
(74) Representative: Marks & Clerk LLP

(57) **Abstract**

The present disclosure provides an apparatus for manufacturing a secondary battery and an electrode plate cutting unit, which are capable of preventing cracks or foreign substances from occurring in a mixture portion and preventing an active material from being transferred to a separator by reducing the load applied to a load concentration area of an electrode plate while the electrode plate is cut. The apparatus for manufacturing a secondary battery includes a transport unit configured to transport an electrode plate, a winding unit configured to wind the electrode plate, and a cutting unit having an upper cutter, a lower cutter, and a stripper installed on a side portion of the lower cutter, that supports the electrode plate when the upper cutter moves downwardly to transmit to the electrode plate a reaction force corresponding to a downward force of the upper cutter, and provides a stress relief space which prevents the reaction force from being transmitted to a portion of the electrode plate to which shear forces due to the upper cutter and the lower cutter are applied.

## Description

### FIELD

The present disclosure relates to the manufacture of a secondary battery, and more specifically, to an apparatus for manufacturing a secondary battery and an electrode plate cutting unit for manufacturing a secondary battery.

### BACKGROUND

Secondary batteries are batteries that can be charged and discharged, unlike primary batteries that cannot be recharged. A secondary battery may generally include an electrode assembly including a positive electrode plate, a separator, and a negative electrode plate, a case (or can) for accommodating the electrode assembly, a substrate tab formed by extending an uncoated portion of each electrode plate of the electrode assembly, an external terminal connected to the substrate tab, and the like.

The electrode assembly accommodated in the case includes a stack type and a jelly roll type. The jelly roll type electrode assembly is manufactured by winding continuously supplied electrode plates using a winding device. The winding device includes an electrode plate cutting machine. The electrode plate cutting machine is a device for cutting an electrode plate at a designed length interval and includes an upper cutter and a lower cutter.

The herein information disclosed in this Background section is for enhancement of understanding of the background of the present disclosure, and therefore, it may contain information that does not constitute a related (or prior) art.

### SUMMARY

The present disclosure is directed to providing an apparatus for manufacturing a secondary battery and an electrode plate cutting unit for manufacturing a secondary battery, which are capable of preventing cracks or foreign substances from occurring in a mixture portion by reducing the load applied to a load concentration area of an electrode plate while the electrode plate is cut.

According to an aspect of the present disclosure, there is provided an apparatus for manufacturing a secondary battery, which includes a transport unit configured to transport an electrode plate, which will be cut, along a transport path, a winding unit configured to receive and wind the electrode plate transported by the transport unit, and a cutting unit having an upper cutter installed above the transport path of the electrode plate, a lower cutter installed below the transport path, and a stripper installed on a side portion of the lower cutter, that supports the electrode plate when the upper cutter moves downwardly to transmit to the electrode plate a reaction force corresponding to a downward force of the upper cutter, and that provides a stress relief space which prevents the reaction force from being transmitted to a portion of the electrode plate to which shear forces due to the upper cutter and the lower cutter are applied.

In some embodiments, the stripper has an upper surface in contact with a lower surface of the electrode plate and a side surface facing the lower cutter, and the stress relief space is a space between a removal surface formed by removing a corner at which the upper surface meets the side surface, the lower cutter, and the electrode plate.

In some embodiments, the removal surface is a flat inclined surface.

In some embodiments, the removal surface is a curved surface having a preset curvature.

In some embodiments, the removal surface is a groove recessed into the stripper.

In some embodiments, the stripper comprises: a stripper main body having an upper surface in contact with a lower surface of the electrode plate and a side surface facing the lower cutter and having a mounting groove in a portion in which the upper surface meets the side surface; and a fixing tip mounted in the mounting groove, and the stress relief space is a space between a removal surface formed by removing a part of the fixing tip, the lower cutter, and the electrode plate.

In some embodiments, the removal surface is a flat inclined surface.

In some embodiments, the removal surface is a curved surface having a preset curvature.

In some embodiments, the stripper comprises: a stripper main body having a fixed inclined surface facing a blade formed at an upper end of the lower cutter; and an inclined plate mounted on the fixed inclined surface and providing a stress relief space between the lower cutter and the electrode plate.

In some embodiments, the inclined plate is a plate-shaped member and is provided as a plurality of inclined plates installed by being stacked on the fixed inclined surface.

According to another aspect of the present disclosure, there is provided an electrode plate cutting unit including an upper cutter installed above a transport path of an electrode plate transported along the transport path, a lower cutter installed below the transport path, and a stripper installed on a side portion of the lower cutter, that supports the electrode plate when the upper cutter moves downwardly to transmit to the electrode plate a reaction force corresponding to a downward force of the upper cutter, and that provides a stress relief space which prevents the reaction force from being transmitted to a portion of the electrode plate to which shear forces, due to the upper cutter and the lower cutter, are applied.

In some embodiments, the stripper has an upper surface in contact with a lower surface of the electrode plate and a side surface facing the lower cutter, and the stress relief space is a space between a removal surface formed by removing a corner at which the upper surface meets the side surface, the lower cutter, and the electrode plate.

In some embodiments, the removal surface is a flat inclined surface.

In some embodiments, the removal surface is a curved surface having a preset curvature.

In some embodiments, the removal surface is a groove recessed into the stripper.

In some embodiments, the stripper comprises: a stripper main body having an upper surface in contact with a lower surface of the electrode plate and a side surface facing the lower cutter and having a mounting groove in a portion in which the upper surface meets the side surface; and a fixing tip mounted in the mounting groove, and the stress relief space is a space between a removal surface formed by removing a part of the fixing tip, the lower cutter, and the electrode plate.

In some embodiments, the removal surface is a flat inclined surface.

In some embodiments, the removal surface is a curved surface having a preset curvature.

In some embodiments, the stripper comprises: a stripper main body having a fixed inclined surface facing a blade formed at an upper end of the lower cutter; and an inclined plate mounted on the fixed inclined surface and providing a stress relief space between the lower cutter and the electrode plate.

In some embodiments, the inclined plate is a plate-shaped member and is provided as a plurality of inclined plates installed by being stacked on the fixed inclined surface.

The electrode plate cutting unit may be a part of the apparatus for manufacturing a secondary battery.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The herein and other objects, features and advantages of the present disclosure will become more apparent to those of ordinary skill in the art by describing embodiments thereof in detail with reference to the accompanying drawings, in which:
FIG. 1 is a schematic view illustrating an electrode assembly of a secondary battery which may be manufactured by an apparatus for manufacturing a secondary battery according to embodiments of the present disclosure;
FIG. 2 is a view illustrating an interior of a pouch-type battery to which the electrode assembly of FIG. 1 is applied;
FIG. 3 is a cross-sectional view illustrating a cylindrical battery which may be manufactured by the apparatus for manufacturing a secondary battery according to embodiments of the present disclosure;
FIG. 4 is a perspective view illustrating an exterior of a prismatic battery which may be manufactured by the apparatus for manufacturing a secondary battery according to embodiments of the present disclosure;
FIG. 5 is a cross-sectional view along line A-A in FIG. 4;
FIG. 6 is a schematic view illustrating a configuration of the apparatus for manufacturing a secondary battery according to embodiments of the present disclosure;
FIG. 7 is an enlarged view of portion k in FIG. 6;
FIGS. 8 to 10 are views illustrating modified examples of the apparatus for manufacturing a secondary battery according to embodiments of the present disclosure;
FIGS. 11 to 15 are views illustrating configurations of stripper applicable to an electrode plate cutting unit according to embodiments of the present disclosure; and
FIG. 16 is a configuration diagram of the apparatus for manufacturing a secondary battery to which the stripper illustrated in FIG. 15A is applied.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

Conventional electrode plate cutting devices have a problem that cracks occur in a mixture layer of an electrode plate due to the concentration of a load transmitted to the electrode plate at the moment of cutting. That is, at the moment of cutting, an upper cutter, a lower cutter, and a stripper simultaneously press a local area of the electrode plate, thereby causing cracks, and in severe cases, cracked portions are separated, thereby generating foreign substances. There is a need for a technology of preventing the occurrence of cracks by dispersing a load applied to a load concentration area.

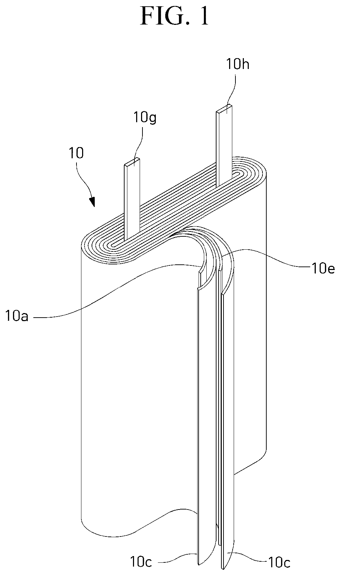

FIG. 1 is a schematic view illustrating an electrode assembly of a secondary battery which may be manufactured through an apparatus for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

In embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to the other side (e.g., the opposite side) of the electrode assembly 10 when the second electrode plate 10e is manufactured, or the second electrode plate 10e may protrude to the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

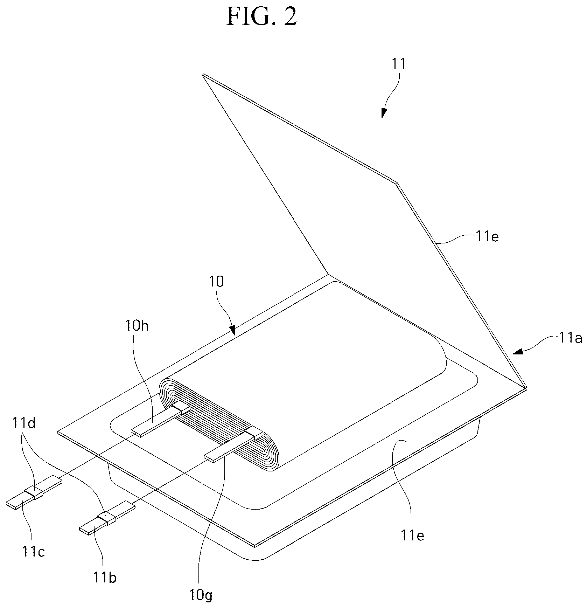

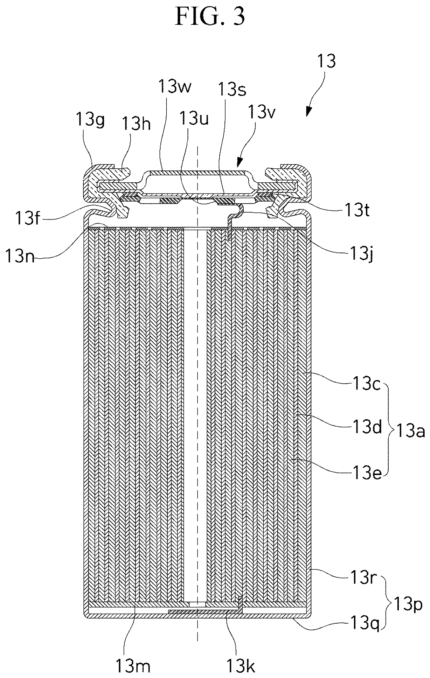

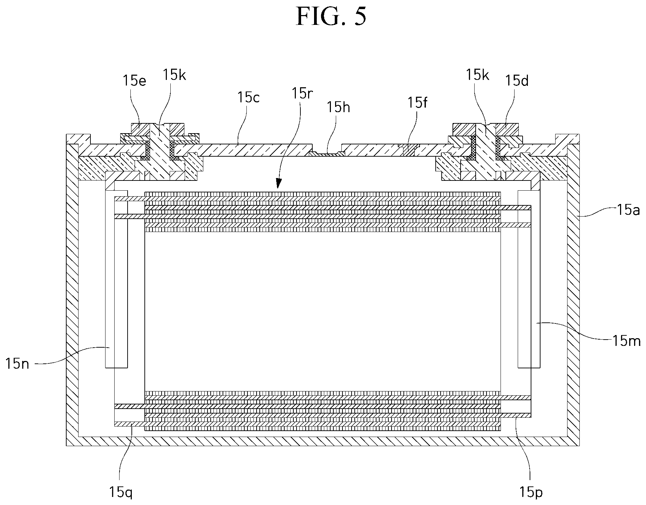

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the above electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA1_{-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a view illustrating an interior of a pouch-type battery to which the electrode assembly of FIG. 1 is applied.

The pouch-type secondary battery includes an electrode assembly 10 and a pouch 11a that accommodates the electrode assembly 10.

The electrode assembly 10 is the same as that illustrated in FIG. 1. The first electrode tab 11g and the second electrode tab 11h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 11e at the edges thereof come into contact with each other with accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery manufactured through the apparatus for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 13p. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Meanwhile, another insulating plate 13m may be included for insulation between the electrode assembly 13a and the bottom portion 13q of the case 13p.

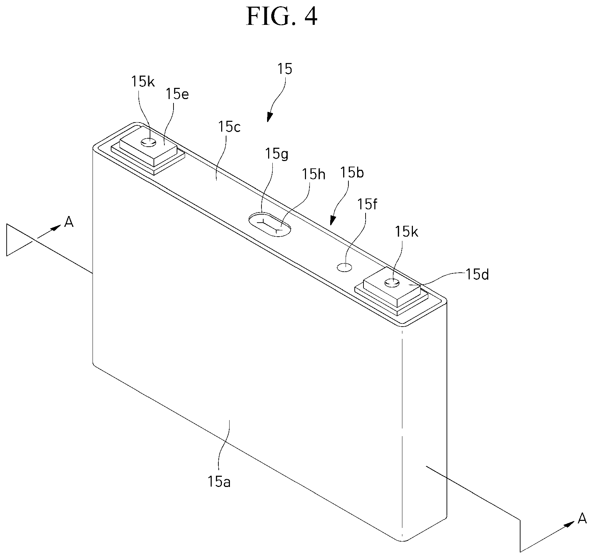

FIG. 4 is a perspective view illustrating an exterior of a prismatic battery which may be manufactured through the apparatus for manufacturing a secondary battery according to embodiments of the present disclosure.

A case 15a forms the overall appearance of a prismatic battery and may be formed of a conductive metal such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 15r may be formed by winding or stacking a first electrode plate, a separator, and a second electrode plate. When the electrode assembly 15r is a wound type, a winding axis may be parallel to the longitudinal direction of the case. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 5, the first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

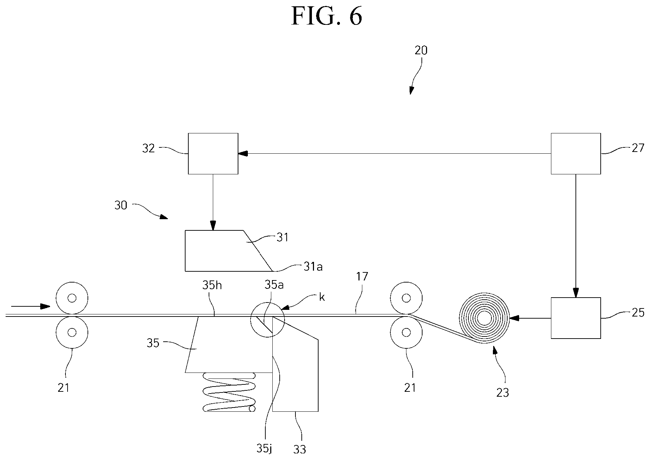

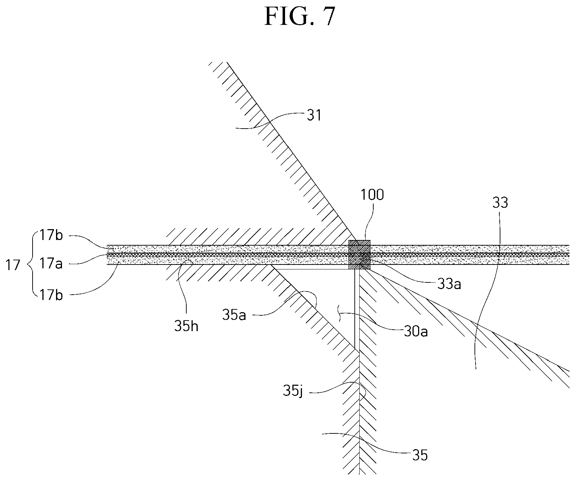

FIG. 6 is a schematic view illustrating a configuration of the apparatus for manufacturing a secondary battery according to embodiments of the present disclosure, and FIG. 7 is an enlarged view of portion K in FIG. 6.

As illustrated, an apparatus 20 for manufacturing a secondary battery according to the present embodiment may include a transport unit, a winding unit 23, and an electrode plate cutting unit 30.

The transport unit may move an electrode plate 17, which will be cut, along a predetermined transport path. The transport unit may include a plurality of transport rollers 21. Some transport rollers are rollers having a driving force, and the remaining rollers do not have a driving force and may serve to only support the transport rollers tightly.

The electrode plate 17 is a stack that has a predetermined width and is formed of a substrate 17a and a mixture 17b. The electrode plate 17 may be a negative electrode plate or a positive electrode plate. The electrode plate 17 may be continuously transported along the transport path provided by the transport unit and wound around the winding unit 23 in a state of being cut by the electrode plate cutting unit 30.

The winding unit 23 may be rotated by power received from a winding unit driver 25 to wind the electrode plate 17. The electrode plate 17 wound around the winding unit 23 may be drawn out by an operator and moved to a subsequent process. The winding unit 23 may include a winding turret winding the electrode plate 17.

The winding unit driver 25 may be controlled by a control unit 27. The winding unit driver 25 may be operated by a control signal of the control unit 27 to rotate or not rotate the winding unit 23.

The control unit 27 may control the on/off and rotational speed of the winding unit driver 25. In addition, the control unit 27 may transmit the control signal to an upper cutter driving unit 32 so that an upper cutter driving unit 32 moves an upper cutter 31 downwardly to cut the electrode plate 17 through cross movement of the upper cutter 31 and a lower cutter 33.

Meanwhile, the electrode plate cutting unit 30 may cut the electrode plate 17 that is transported into a predetermined length unit. Since the jelly roll-type electrode assembly is formed by winding the electrode plate 17, a cutting length of the electrode plate 17 may vary depending on a diameter of the jelly roll being manufactured. The electrode plate 17 cut by the electrode plate cutting unit 30 may be wound around the winding unit 23 and then drawn out to the outside.

The electrode plate cutting unit 30 may include the upper cutter 31, the lower cutter 33, and a stripper 35.

The upper cutter 31 may have a blade 31a at one side of a lower end portion thereof and may be installed to move upwardly and downwardly above the transport path of the electrode plate 17. The upward and downward movement of the upper cutter 31 may be implemented by the upper cutter driving unit 32. In addition, the lower cutter 33 may be disposed below the transport path of the electrode plate 17 and may have a blade 33a on an upper end portion thereof. See FIG. 7. The lower cutter 33 may cut the electrode plate 17 through cross movement with the upper cutter 31.

The stripper 35 is installed on a side portion of the lower cutter 33 and supports the electrode plate 17 when the upper cutter 31 moves downwardly and transmits a reaction force corresponding to a downward force of the upper cutter 31 to the electrode plate 17. In particular, the stripper 35 may provide a stress relief space 30a. See FIG. 7. The stress relief space 30a may be a space formed at the boundary between the electrode plate 17, the lower cutter 33, and the stripper 35. The stress relief space 30a prevents the reaction force from being transmitted to only a portion of the electrode plate 17 to which shear forces due to the upper cutter 31 and the lower cutter 33 are applied.

While the electrode plate 17 is cut, shear stress and compressive stress may occur in the electrode plate 17. The shear stress occurs when the upper cutter 31 crosses the lower cutter 33. The shear stress is concentrated in a stress concentration area 100 illustrated in FIG. 7. In addition, the compressive stress occurs when the electrode plate 17 is compressed between the upper cutter 31 and the stripper 35 due to the downward movement of the upper cutter 31.

However, when the stress relief space 30a is not present, the shear force generated due to the cross movement of the upper cutter 31 and a lower cutter 33 and the compressive force acting as the reaction force may be applied simultaneously to the stress concentration area 100. When the shear force and the compressive force are applied simultaneously, cracks may occur in the mixture 17b or the mixture 17b may be separated from the substrate 17a.

However, when the stress relief space 30a is provided, the compressive force can be prevented from being applied to the stress concentration area 100. The load burden on the stress concentration area 100 can be greatly reduced. As the load burden is reduced, the mixture 17b may not be damaged or separated. The stress relief space 30a may be formed by processing the stripper 35.

The stripper 35 may include an upper surface 35h and a side surface 35j. The upper surface 35h is a surface in contact with a lower surface of the electrode plate 17, and the side surface 35j is a surface facing the lower cutter. The side surface 35j may be in surface contact with the lower cutter 33. When the side surface 35j of the stripper 35 is in surface contact with the lower cutter 33, vibrations can be prevented while the stripper 35 moves upwardly or downwardly.

The stress relief space 30a may be a space between a removal surface formed by removing a corner at which the upper surface 35h meets the side surface 35j, the lower cutter 33, and the electrode plate 17. The compression force due to the reaction of the stripper 35 does not act on a portion of the electrode plate 17, which is open to the stress relief space 30a. A shape of the removal surface may be implemented in any of various ways.

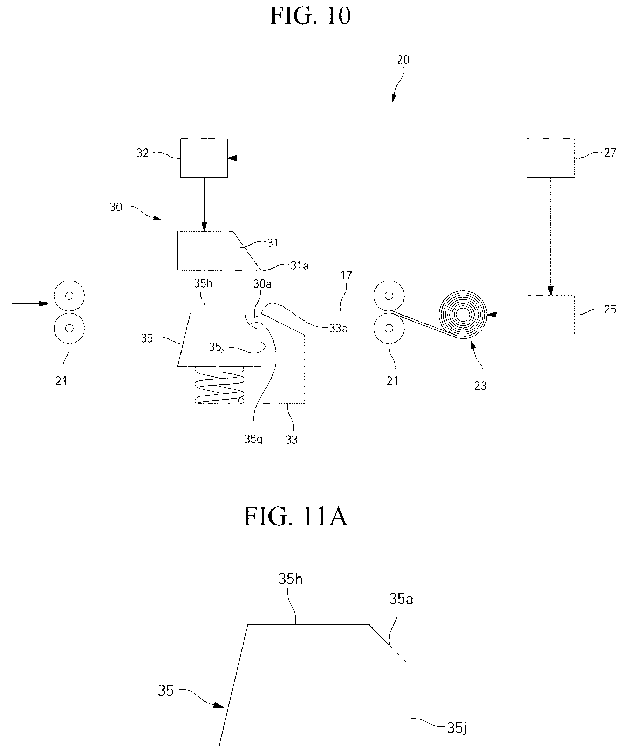

The removal surface illustrated in FIG. 7 is an inclined surface 35a. FIGs. 11A to 11C separately illustrate strippers 35 having various angles for the inclined surface 35a as a removal surface.

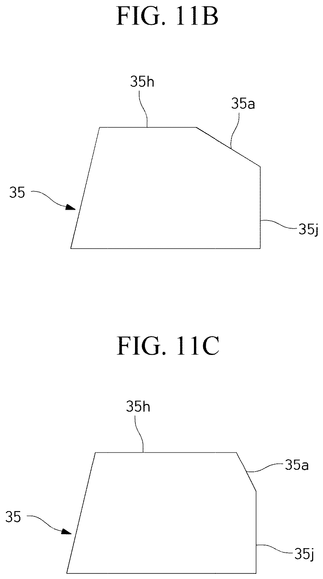

In the case of the stripper 35 illustrated in FIG. 11A, an angle (θ) between the inclined surface 35a and the upper surface 35h may be 45 degrees. Instead, the inclined surface 35a of the stripper 35 illustrated in FIG. 11B has an inclination angle of about 30 degrees, which is gentler than that of FIG. 11A, and the inclination angle of the inclined surface 35a of the stripper 35 illustrated FIG. 11C is greater than that of the stripper 35 illustrated in FIG. 11A.

As the inclination angle decreases, a length of the upper surface 35h may decrease and an area of the stress relief space 30a may increase. Various specifications of strippers 35 may be provided, and the stripper 35 may be selected and used according to the size of the electrode plate 17 which will be cut.

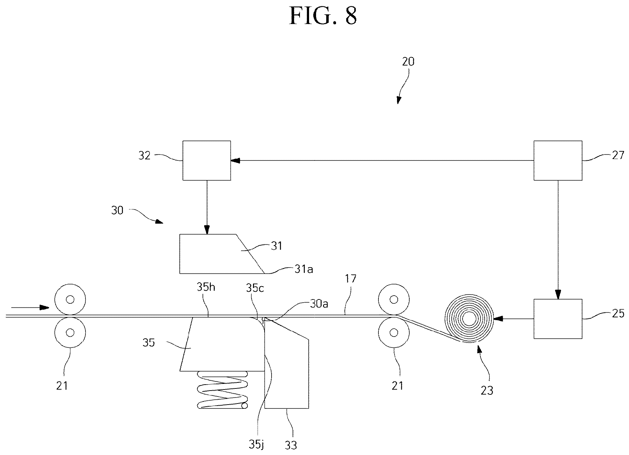

FIG. 8 is a view illustrating a modified example of the apparatus for manufacturing a secondary battery according to embodiments of the present disclosure.

Hereinafter, the same drawing symbols as the herein drawing symbols denote the same members having the same functions.

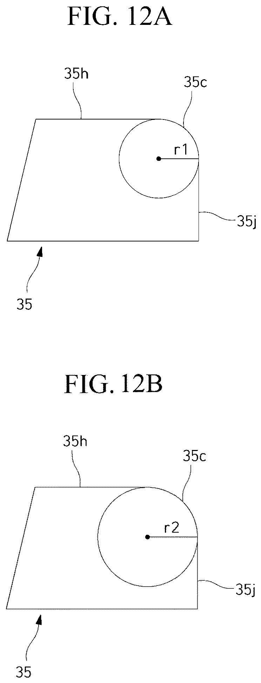

As illustrated, the stripper 35 illustrated in FIG. 8 may have a curved surface 35c formed as a removal surface. The curved surface 35c is a curved surface that has a constant curvature and is convex. Due to the curved surface 35c, the stress relief space 30a may be formed at the boundary between the curved surface 35c, the electrode plate 17, and the lower cutter 33. Strippers 35 with various radiuses for the curved surface 35c are illustrated separately in FIGs. 12A to 12C.

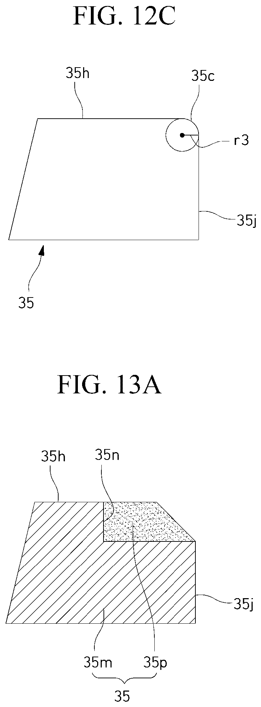

As illustrated in FIGs. 12A to 12C, the curved surface 35c may have a curvature having a certain radius. A size of the curved surface 35c may vary. The curved surface of FIG. 12A has a curvature of a circle with a radius of r1. Instead, the curved surface of FIG. 12B has a curvature of a circle with a radius of r2, and the curved surface 35c of FIG. 12C has a curvature of a circle with a radius of r3. A difference in sizes of the radii is r2>r1>r3.

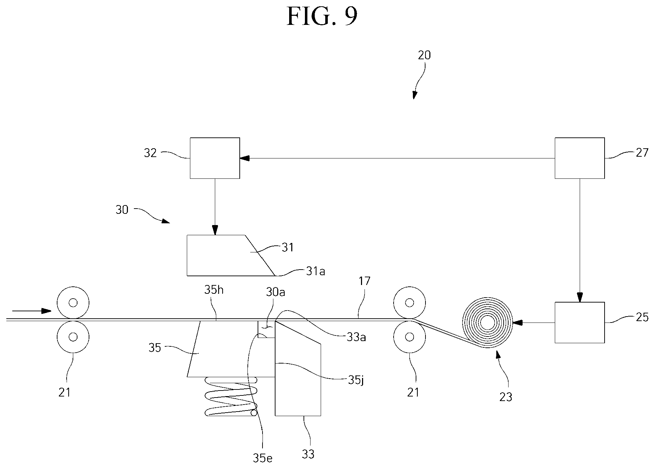

FIG. 9 is a view illustrating another modified example of the apparatus for manufacturing a secondary battery according to one embodiment of the present disclosure.

As illustrated in FIG. 9, a right-angled groove 35e may be formed in the stripper 35 of the electrode plate cutting unit 30. The right-angled groove 35e is a groove having a right-angled bottom surface and may provide the stress relief space 30a. That is, the removal surface is a bottom surface (e.g., the right-angled bottom surface) of a groove recessed into the stripper 35. A size and shape of the right-angled groove 35e may be implemented differently in various embodiments.

FIG. 10 is a view illustrating still another modified example of the apparatus for manufacturing a secondary battery according to embodiments of the present disclosure.

As illustrated in FIG. 10, a concave groove 35g may be applied to the stripper 35 of the electrode plate cutting unit 30. The concave groove 35g is an groove having a concave bottom surface and may provide the stress relief space 30a. That is, the removal surface is a bottom surface (e.g., the concave bottom surface) of a groove recessed into the stripper 35.

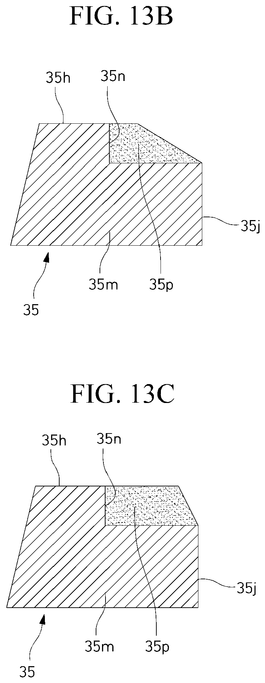

FIGs. 13A to 13C are views for describing another configuration example of the stripper 35 applicable to the electrode plate cutting unit 30 according to embodiments of the present disclosure.

As illustrated, the stripper 35 may include a stripper main body 35m and a fixing tip 35p, and the stress relief space 30a may be a space between a removal surface formed by removing a part of the fixing tip 35p, the lower cutter 33, and the electrode plate 17.

The stripper main body 35m may have a structure in which the upper surface 35h is in contact with the lower surface of the electrode plate 17 and the side surface 35j faces the lower cutter 33, and a mounting groove 35n is formed in a portion in which the upper surface 35h meets the side surface 35j. A size of the mounting groove 35n may be implemented differently.

The fixing tip 35p is a member that is detachably coupled to the mounting groove 35n. The fixing tip 35p may be made of the same material as the stripper main body 35m or a different material. The stripper main body 35m may be made of a metal, and the fixing tip 35p may be made of a synthetic resin.

In addition, the inclined surface 35a may be formed on the fixing tip 35p, and the removal surface formed by removing a part of the fixing tip 35p may be the inclined surface 35a. An inclination angle of the inclined surface 35a with respect to a horizontal plane may vary. The gentler the inclination angle, the wider the space of the stress relief space 30a.

Instead of an inclined surface, the surface may be rounded or grooved as above.

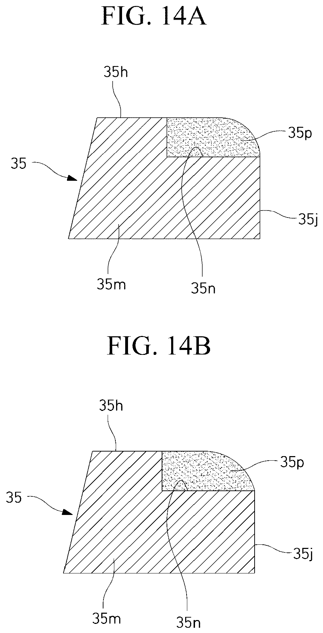

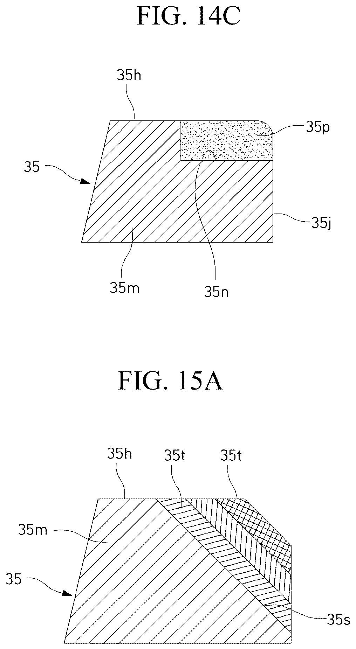

Each of the strippers 35 illustrated in FIGS. 14A to 14C also includes the stripper main body 35m and the fixing tip 35p. The mounting groove 35n may be formed in the stripper main body 35m. In addition, the fixing tip 35p may be fixedly inserted into the mounting groove 35n. In addition, the curved surface 35c may be formed on the fixing tip 35p, and the removal surface formed by removing a part of the fixing tip 35p may be the curved surface 35ce having a preset curvature. The curved surface 35c may have a convex shape. A stress relief space 30a may be formed between the curved surface 35c, the electrode plate, and the lower cutter 33.

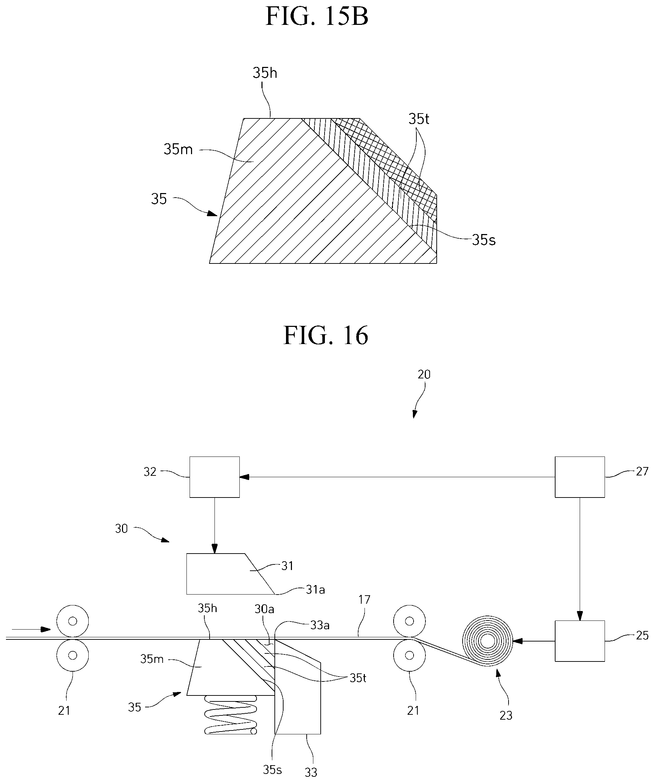

Meanwhile, as illustrated in FIGS. 15A and 15B, the stripper 35 of the electrode plate cutting unit 30 of the present embodiment may include the stripper main body 35m and a plurality of inclined plates 35t.

The stripper main body 35m may include the upper surface 35h in contact with the lower surface of the electrode plate 17 and a fixed inclined surface 35s. The fixed inclined surface 35s may be an inclined surface facing the blade 33a formed at the upper end of the lower cutter 33. The fixed inclined surface 35s may have an angle of 40 to 60 degrees with respect to the horizontal plane.

In addition, the inclined plate 35t may be mounted on the fixed inclined surface 35s and may provide a stress relief space 30a between the lower cutter and the electrode plate. The inclined plate 35t is a plate-shaped member having a predetermined thickness, and a plurality of plates may be fixedly stacked on the fixed inclined surface 35s. As the number of stacked inclined plates 35t increases, the size of the stress relief space 30a may decrease. FIG. 15A illustrates an example in which three inclined plates 35t are applied, and FIG. 15B illustrates an example in which two inclined plates 35t are applied.

The fixing of the inclined plates 35t to the stripper main body 35m and the fixing of the inclined plates 35t to each other may be made by bonding or welding.

FIG. 16 is a configuration diagram of the apparatus 20 for manufacturing a secondary battery to which the stripper illustrated in FIGS. 15A and 15B is applied.

As illustrated, the stripper 35 may be installed on the side portion of the lower cutter 33. The stripper 35 is formed of the stripper main body 35m and three inclined plates 35t, and it can be seen that a stress relief space 30a is formed between the inclined plates 35t, the electrode plate 17, and the lower cutter 33.

According to an apparatus for manufacturing a secondary battery and an electrode plate cutting unit for manufacturing a secondary battery as described herein, it is possible to prevent cracks or foreign substances from occurring in a mixture portion and to prevent an active material from being transferred to a separator by reducing the load applied to a load concentration area of an electrode plate while the electrode plate is cut.

Although the present disclosure has been described herein with respect to embodiments thereof, the present disclosure is not limited thereto. Various modifications and variations can be made thereto by those skilled in the art within the scope of the present invention as defined by the appended claims and their equivalents.

## Claims

1. An apparatus for manufacturing a secondary battery, comprising:
a transport unit configured to transport an electrode plate, which will be cut, along a transport path;
a winding unit configured to receive and wind the electrode plate transported by the transport unit; and
a cutting unit, having:
an upper cutter installed above the transport path,
a lower cutter installed below the transport path, and
a stripper installed on a side portion of the lower cutter, that supports the electrode plate when the upper cutter moves downwardly to transmit to the electrode plate a reaction force corresponding to a downward force of the upper cutter, and that provides a stress relief space which prevents the reaction force from being transmitted to a portion of the electrode plate to which shear forces, due to the upper cutter and the lower cutter, are applied.

2. The apparatus as claimed in claim 1, wherein the stripper has an upper surface in contact with a lower surface of the electrode plate and a side surface facing the lower cutter, and
the stress relief space is a space between a removal surface formed by removing a corner at which the upper surface meets the side surface, the lower cutter, and the electrode plate.

3. The apparatus as claimed in claim 2, wherein the removal surface is any one of a flat inclined surface, a curved surface having a preset curvature, and a groove recessed into the stripper.

4. The apparatus as claimed in any one of the preceding claims, wherein the stripper comprises:
a stripper main body having an upper surface in contact with a lower surface of the electrode plate and a side surface facing the lower cutter and having a mounting groove in a portion in which the upper surface meets the side surface; and
a fixing tip mounted in the mounting groove, and
the stress relief space is a space between a removal surface formed by removing a part of the fixing tip, the lower cutter, and the electrode plate.

5. The apparatus as claimed in claim 4, wherein the removal surface is any one of a flat inclined surface and a curved surface having a preset curvature.

6. The apparatus as claimed in any one of the preceding claims, wherein the stripper comprises:
a stripper main body having a fixed inclined surface facing a blade formed at an upper end of the lower cutter; and
an inclined plate mounted on the fixed inclined surface and providing a stress relief space between the lower cutter and the electrode plate.

7. The apparatus as claimed in claim 6, wherein the inclined plate is a plate-shaped member and is provided as a plurality of inclined plates installed by being stacked on the fixed inclined surface.

8. An electrode plate cutting unit comprising:
an upper cutter installed above a transport path of an electrode plate transported along the transport path;
a lower cutter installed below the transport path; and
a stripper installed on a side portion of the lower cutter, that supports the electrode plate when the upper cutter moves downwardly to transmit to the electrode plate a reaction force corresponding to a downward force of the upper cutter, and provides a stress relief space which9revents the reaction force from being transmitted to a portion of the electrode plate to which shear forces, due to the upper cutter and the lower cutter, are applied.

9. The electrode plate cutting unit as claimed in claim 8, wherein the stripper has an upper surface in contact with a lower surface of the electrode plate and a side surface facing the lower cutter, and
the stress relief space is a space between a removal surface formed by removing a corner at which the upper surface meets the side surface, the lower cutter, and the electrode plate.

10. The electrode plate cutting unit as claimed in claim 9, wherein the removal surface is any one of a flat inclined surface, a curved surface having a preset curvature, and a groove recessed into the stripper.

11. The electrode plate cutting unit as claimed in any one of claims 8 to 10, wherein the stripper comprises:
a stripper main body having an upper surface in contact with a lower surface of the electrode plate and a side surface facing the lower cutter and having a mounting groove in a portion in which the upper surface meets the side surface; and
a fixing tip mounted in the mounting groove, and
the stress relief space is a space between a removal surface formed by removing a part of the fixing tip, the lower cutter, and the electrode plate.

12. The electrode plate cutting unit as claimed in claim 11, wherein the removal surface is any one of a flat inclined surface and a curved surface having a preset curvature.

13. The electrode plate cutting unit as claimed in any one of claims 8 to 12, wherein the stripper comprises:
a stripper main body having a fixed inclined surface facing a blade formed at an upper end of the lower cutter; and
an inclined plate mounted on the fixed inclined surface and providing a stress relief space between the lower cutter and the electrode plate.

14. The electrode plate cutting unit as claimed in claim 13, wherein the inclined plate is a plate-shaped member and is provided as a plurality of inclined plates installed by being stacked on the fixed inclined surface.
